# EUROPEAN PATENT APPLICATION

(11) **EP 0 809 064 A1**
(43) Date of publication of application: **26.11.1997**
(21) Application number: 97201520.0
(22) Date of filing: 21.05.1997
(51) Int. Cl.: F16L 47/02, B29C 65/34

(54) **A heat-fusible pipe fitting**

(30) Priority: 24.05.1996 IT MI961056
(71) Applicant: Nupi S.p.A., 40026 Imola (Bologna) (IT)
(72) Inventor: Genoni, Massimo, 40020 Imola (Bologna) (IT); Genoni, Marco, 20148 Milano (IT)
(74) Representative: Faraggiana, Vittorio, Dr. Ing.

(57) **Abstract**

A heat-fusible pipe fitting (10, 110, 210) comprises a body having a shank (11, 111, 211) therein which is intended for being fitted into one end of a pipe to be jointed and an electric heating winding (16, 116, 216) for melting the body material together with the pipe material on the shank. Thus fluid inside the pipe is prevented from coming into contact with the pipe head. Consequently the heat-fusible pipe fitting is adapted for use with multi-layered pipes.

## Description

The present invention relates to a heat-fusible pipe fitting for connecting ducts of fusible material, in particular of the multi-layered type.

In the prior art, heat-fusible pipe fittings are known which are formed of a sleeve in which an electric heating element is buried. A duct to be connected to the pipe fitting is inserted by its end into the sleeve and the sleeve is heated by a current flow in the heating element so that it is welded with the pipe material and makes the desired sealed connection.

These known pipe fittings appeared to be inappropriate for connection with multi-layered pipes where the inner layer is made of a material adapted to resist the attack of the fluid carried along the pipe, whereas the outer layer or layers possess appropriate mechanical and/or weatherability features. With multi-layered pipes welded together by means of a traditional pipe fitting, the pipe head is exposed to the fluid flowing in the pipe itself and consequently also the pipe layers that are inappropriate to get in touch with the fluid are brought into contact therewith. As a result, multi-layered pipes have been deemed inappropriate for use with heat-fusible pipe fittings and they have been always used with traditional mechanical pipe fittings.

It is a general object of the present invention to obviate the above mentioned drawbacks by providing heat-fusible pipe fittings enabling the pipe head to be maintained isolated from the inside of the pipe, so that they can be used also in the case of multi-layered pipes in which the inner layer is conceived for resisting the conveyed fluid and the outer layers are inappropriate to withstand contact with this fluid.

In view of the above object, in accordance with the invention, a heat-fusible pipe fitting has been provided which comprises a body having a shank therein which is intended for being fitted in one end of a pipe to be jointed and an electric heating winding for melting the body material together with the pipe material on the shank.

For better explaining the innovatory principles of the present invention and the advantages it offers as compared with the known art, possible embodiments applying said principles will be described hereinafter, with the aid of the accompanying drawings. In the drawings:
- Fig. 1 is a view partly in section of a first pipe fitting in accordance with the invention;
- Fig. 2 is a view partly in section of a second pipe fitting in accordance with the invention;
- Fig. 3 is a view partly in section of a third pipe fitting in accordance with the invention.

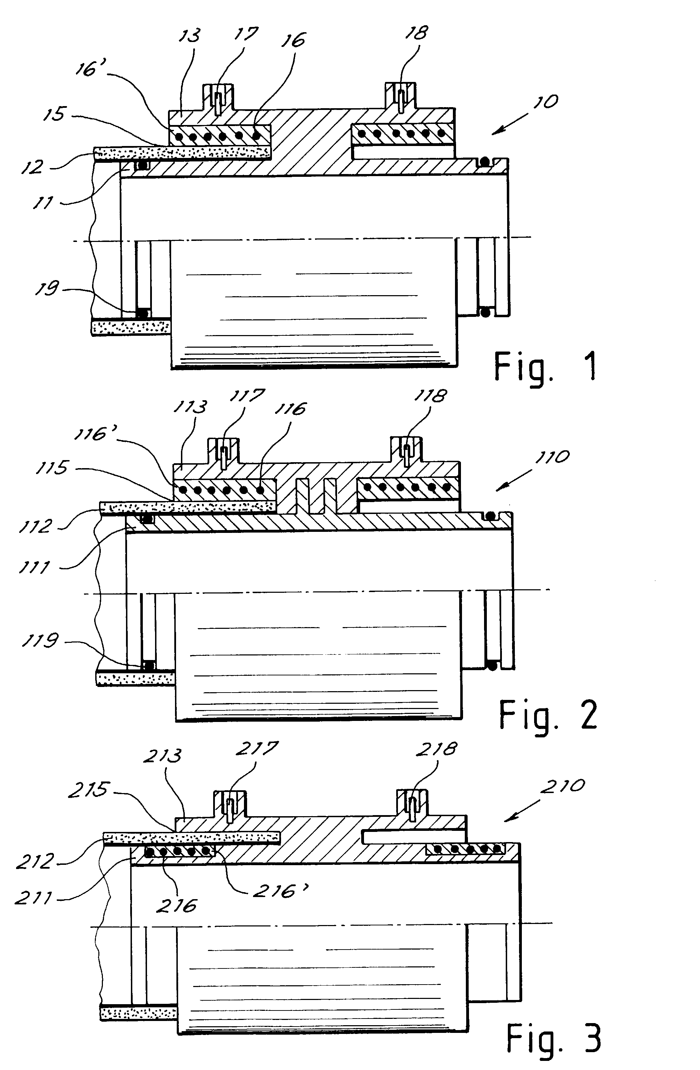

With reference to the drawings, shown in Fig. 1 is a first pipe fitting generally denoted by 10, comprising a body having a shank 11 on which the head of a pipe 12 to be jointed can be fitted. The pipe fitting further comprises a circumferential wall 13 surrounding the shank so as to define a toroidal cavity 15 between the wall and the shank, which cavity is intended for receiving the end of the pipe to be jointed. Held in the wall 13 is an electric winding 16 adapted to melt together the wall and outer surface of the pipe fitted on the shank. Advantageously, the winding is buried into a toroidal insert 16' incorporated into the wall during the pipe fitting moulding step.

The pipe fitting is made of a selected material compatible with the fluid that will flow in the pipe. For instance, the material employed for the pipe fitting can be the same material as used for the inner layer in the pipe. On the contrary, the material incorporating the electric winding is selected for being compatible with the material of the outer pipe surface, so that it can melt together with it and ensure a mechanical sealing of the pipe on the shank. For example the outer pipe surface and the insert incorporating the winding can be both made of polyethylene.

The electric winding is connected with two electric terminals 17, 18 on the outer side of the pipe fitting, which are adapted to electrically connect the winding to an appropriate power supplying apparatus similar to those used with traditional pipe fittings and therefore well known to a person skilled in the art.

Advantageously, an O-ring seal 19 may be provided on the shank to ensure tightness between the shank and pipe and avoid seepages that could reach the pipe head and therefore the outer material.

Shown in Fig. 2 is an alternative embodiment of a pipe fitting in accordance with the invention. For convenience, elements similar to those of the preceding embodiment have been allocated the same reference numerals increased by one hundred. Hence, there is a pipe fitting 110 comprising a body provided with a shank 111 on which the head of a pipe 112 to be jointed can be fitted. A circumferential wall 113 surrounds the shank so as to define a toroidal cavity 115 for receiving the pipe. Held in wall 113 is an electric winding 116 intended for melting together the wall and outer surface of the pipe. Advantageously, the winding is buried into a toroidal insert 116' incorporated into the wall during the pipe fitting moulding step. Terminals 117, 118 enable electric connection with the winding. An O-ring seal 119 is present on the shank. Unlike the embodiment in Fig. 1, in the pipe fitting 110 the shank 111 is formed separated from the pipe fitting body. Moulded on the shank root suitably shaped with ribs for catching, is the remaining portion of the fitting pipe body forming the wall 113. In this way, it is possible for the shank alone to be made of a material resistant to the fluid to be carried, whereas the remaining pipe fitting portion can be made of cheaper materials. For example, the shank may be made of a metal material, whereas the remaining portion of the body may be made of polyethylene.

Shown in Fig. 3 is another alternative embodiment of a pipe fitting in accordance with the invention. For convenience, elements similar to those of the embodiment in Fig. 1 will be denoted by same reference numerals increased by two hundred. Hence, there is a pipe fitting 210, comprising a body having a shank 211 on which the head of a pipe 212 to be jointed can be fitted. A circumferential wall 213 surrounds the shank so as to define a toroidal cavity 215 for pipe reception. Held in the shank 211 is an electric winding 216 intended for melting together the outer shank wall and the inner surface of the pipe disposed thereon. In this case too, advantageously, the winding is buried into a toroidal insert 216' incorporated into the shank.

In this way, catching of the pipe takes place by melting of the inner layer, in place of the outer layer, so that occurrence of seepages towards the pipe head is surely prevented and, in addition, the presence of an O-ring on the shank becomes unnecessary.

Terminals 217, 218 enable electric connection for melting, The pipe fitting is made of a selected material compatible with the fluid that will flow in the pipe and adapted for melting together with the inner material of the pipe.

At this point it is apparent that the intended purposes have been achieved and pipe fittings adapted for connection of multi-layered pipes are obtained in which the pipe heads are protected from contact with the fluid in the pipes.

Obviously, the above description of embodiments applying the innovatory principles of the invention is given for purposes of illustration only and is not to be interpreted as a limitation of the scope of the invention as herein claimed.

For example, for the sake of simplicity, pipe fittings are shown symmetric to a transverse median plane so as to have two oppositely-directed shanks, in order to enable junction of two pipes. However pipe fittings may also be conceived for connection of a pipe to other elements, such as valves, pipe branches, etc.

In this case one pipe fitting head may be made in accordance with the invention, while the rest will have a known conformation depending on the particular use.

In addition, although the presence of a toroidal cavity for pipe reception protects the pipe head from both the fluid in the pipe and the surrounding atmosphere, if wished, this toroidal cavity can be eliminated when the melting means is on the shank, as shown in Fig. 3.

## Claims

1. A heat-fusible pipe fitting (10, 110, 210) comprising a body having a shank (11, 111, 211) therein which is intended for being fitted into one end of a pipe to be jointed and an electric heating winding (16, 116, 216) for melting the body material together with the pipe material on the shank.

2. A pipe fitting according to claim 1, characterized in that the pipe fitting body comprises a wall (13, 113, 213) circumferentially surrounding the shank to define a toroidal cavity (15, 115, 215) between the wall and the shank, which is adapted to receive one end of a pipe to be jointed.

3. A pipe fitting according to claim 2, characterized in that the electric winding (16, 116) is held in said wall (13, 113) and is adapted to melt together the wall and the outer portion of the pipe fitted on the shank.

4. A pipe fitting according to claim 3, characterized in that said wall (13, 113) comprises an insert (16', 216') into which the electric winding is buried.

5. A pipe fitting according to claim 1, characterized in that the electric winding (216) is on the shank (211) and is intended for melting together the shank and the inner portion of the pipe fitted on the shank.

6. A pipe fitting according to claim 5, characterized in that the shank (211) comprises an insert (216') into which the electric winding (216) is buried.

7. A pipe fitting according to claim 3, characterized in that the shank forms an element (111) on which said wall of plastic material is moulded.

8. A pipe fitting according to claim 7, characterized in that the shank is made of a metal material.

9. A pipe fitting according to claim 1, characterized in that the shank is externally comprised of an O-ring seal (19, 119).

10. A pipe fitting according to claim 1, characterized in that it is made symmetric to a transverse median plane so as to have two oppositely-directed shanks.
